# EUROPÄISCHE PATENTANMELDUNG

(11) **EP 2 853 978 A1**
(43) Veröffentlichungstag der Anmeldung: **01.04.2015**
(21) Anmeldenummer: 13186193.2
(22) Anmeldetag: 26.09.2013
(51) Int. Cl.: G05D 16/06, F16K 17/36, F23N 5/24

(54) **Kippschutzventil**

(71) Anmelder: GOK Regler- und Armaturen-Gesellschaft mbH & Co.KG, 97252 Frickenhausen (DE)
(72) Erfinder: Peter, Anita, 97199 Ochsenfurt (DE); Wanner, Ernst, 97252 Frickenhausen (DE)
(74) Vertreter: Gassner, Wolfgang

(57) **Zusammenfassung**

Die Erfindung betrifft einen Gasdruckregler (G), bei dem in einem Gehäuse (1) eine erste Druckregelstufe (D1) zum Regeln eines Eingangsdrucks auf einen Zwischendruck im Bereich von 110 bis 150 mbar und eine der ersten Druckregelstufe (D1) stromabwärts nachgeschalteten zweiten Druckregelstufe (D2) zum Regeln des Zwischendrucks auf einen Ausgangsdruck im Bereich von 30 bis 55 mbar vorgesehen sind. Zur sicherheitstechnischen Verbesserung wird erfindungsgemäß vorgeschlagen, dass an einem stromabwärts der zweiten Druckregelstufe (D2) vom Gehäuse (1) sich erstreckenden Ausgangsstutzen (13) ein Sicherheitsventil (14) befestigt ist, welches in einer ordnungsgemäßen Normalposition einen Gasdurchfluss ermöglicht und bei einer gegenüber der Normalposition um einen Kippwinkel (α) von mehr als 35° verkippten Sicherheitsposition den Gasdurchfluss selbsttätig unterbricht.

## Beschreibung

Die Erfindung betrifft einen Gasdruckregler nach dem Oberbegriff des Anspruchs 1.

Ein solcher Gasdruckregler ist beispielsweise aus der DE 198 54 301 C2 bekannt. Der bekannte Gasdruckregler weist eine erste Druckregelstufe sowie eine stromabwärts nachgeschaltete zweite Druckregelstufe auf. Die Druckregelstufen sind so ausgestaltet, dass im Falle eines Ausfalls einer der beiden Druckregelstufen ein sicherheitstechnisch höchst zulässiger Ausgangsdruck nicht überschritten wird.

Die DE 203 17 221 U1 offenbart einen Gasdruckregler mit einer ersten Druckregelstufe und einer stromabwärts nachgeschalteten zweiten Druckregelstufe. Die zweite Druckregelstufe ist mit einer Stelleinrichtung versehen, welche bei einem Druckabfall in der zweiten Regelstufe unter einen vorgegebenen Mindestwert den Gasdruckfluss automatisch unterbricht. Ein Regelbetrieb ist erst nach manueller Entsperrung der Stellvorrichtung mittels eines von außen her bedienbaren Stellmittels wieder möglich.

Die EP 1 298 392 A1 offenbart eine Vorrichtung zur Unterbrechung eines Gasflusses in einem gasbetriebenen Gerät. Dabei wird mittels eines in seiner Lage veränderbaren Stellkörpers in einer Normalposition ein federbelasteter Ventilkörper in einer geöffneten Stellung gehalten. Beim Verkippen des Gasgeräts verändert der Stellkörper seine Lage derart, dass der Ventilkörper durch die Kraft der Feder in eine geschlossene Stellung gezwungen und damit der Gasfluss zum Gasgerät unterbrochen wird. - Im Falle einer durch die Vorrichtung bewirkten Unterbrechung des Gasflusses steht in einem zur Vorrichtung führenden Gaszuführschlauch weiterhin unter Druck Gas an. Falls es nach dem Verkippen der Vorrichtung, beispielsweise infolge eines Erdbebens, zusätzlich zu einem Bruch der Gaszuführleitung kommt, entweicht das darin unter Druck befindliche Gas. Das kann zu einem Brand oder einer Explosion führen.

Aufgabe der Erfindung ist es, die Nachteile nach dem Stand der Technik zu beseitigen. Es soll insbesondere ein sicherheitstechnisch verbesserter Gasdruckregler angegeben werden.

Diese Aufgabe wird durch die Merkmale des Anspruchs 1 gelöst. Zweckmäßige Ausgestaltungen der Erfindung ergeben sich aus den Merkmalen der Ansprüche 2 bis 12.

Nach Maßgabe der Erfindung ist vorgesehen, dass an einem stromabwärts der zweiten Regelstufe vom Gehäuse sich erstreckenden Ausgangsstutzen ein Sicherheitsventil befestigt ist, welches in einer ordnungsgemäßen Normalposition einen Gasdruckfluss ermöglicht und bei einer gegenüber der Normalposition um einen Kippwinkel von mehr als 35° verkippten Sicherheitsposition den Gasdurchfluss selbsttätig unterbricht.

Indem erfindungsgemäß das Sicherheitsventil fest mit dem Ausgangsstutzen verbunden ist, wird bereits bei einem Verkippen des üblicherweise fest an einer Gasflasche angebrachten Gasdruckreglers der Gasfluss unterbrochen. Im Falle eines Bruchs der Gasversorgungsleitung wird ein unerwünschter Gasaustritt weitgehend vermieden. Mit dem vorgeschlagenen Gasdruckregler kann insbesondere im Falle eines Erdbebens, eines Unfalls oder dgl. ein Austritt von Gas schnell und sicher unterbrochen werden. Dadurch bedingte Folgeschäden können vermieden werden.

Im Sinne der vorliegenden Erfindung wird unter dem Begriff "Normalposition" eine Position verstanden, welche zu einer ordnungsgemäßen Montageposition des Gehäuses korrespondiert. Beispielsweise kann eine ordnungsgemäße Montageposition des Gehäuses so orientiert sein, dass darin aufgenommene Stellmembranen der Druckregelstufen im Wesentlichen horizontal orientiert sind. Der Gasdruckregler kann in der Montageposition beispielsweise unmittelbar am Ausgangsstutzen einer Flüssiggasflasche angebracht sein. Wenn die Flüssiggasflasche, beispielsweise durch ein Erdbeben oder einen Unfall, verkippt wird oder umfällt, nimmt das damit fest verbundene Sicherheitsventil die Sicherheitsposition ein, wodurch der Gasdurchfluss unterbrochen wird. Erfindungsgemäß findet die Unterbrechung des Gasdurchflusses ab einem Kippwinkel von mehr als 35° statt. Der "Kippwinkel" ist definiert durch den Winkel, den eine erste durch das Sicherheitsventil verlaufende Achse in der "Normalposition" mit derselben Achse im verkippten Zustand bildet.

Nach einer vorteilhaften Ausgestaltung öffnet das Sicherheitsventil selbstständig wieder, wenn der Kippwinkel unterschritten wird. In einer entsprechenden konstruktiven Ausgestaltung kann das Sicherheitsventil einen Ventilkörper und einen durch eine Kippbewegung in seiner Lage veränderbaren Stellkörper, vorzugsweise eine Kugel, umfassen, welcher in der Normalposition den Ventilkörper entgegen der Kraft eines den Ventilkörper in eine geschlossene Stellung zwingenden ersten Federelements in einer geöffneten Stellung hält und welcher in der Sicherheitsposition eine Lage einnimmt, in welcher der Ventilkörper durch die Kraft des ersten Federelements in die geschlossene Stellung gezwungen wird. Die vorgeschlagene konstruktive Ausgestaltung des Sicherheitsventils lässt sich einfach realisieren. Sie weist wenige Bauteile auf. Das vorgeschlagene Sicherheitsventil ist robust und störunanfällig.

Nach einer besonders vorteilhaften Ausgestaltung ist das Sicherheitsventil so ausgestaltet, dass im am Ausgangsstutzen befestigten Zustand eine Bewegungsrichtung des Ventilkörpers etwa senkrecht zu einer Achse des Ausgangsstutzens verläuft. Die vorgeschlagene Ausgestaltung ermöglicht vorteilhafterweise eine Montage des Gasdruckreglers an einer Gasflasche derart, dass die Stellmembranen der Gasdruckregler etwa horizontal angeordnet sind.

Nach einer weiteren vorteilhaften Ausgestaltung ist die zweite Druckregelstufe mit einer Druckanzeigevorrichtung versehen. Die Druckanzeigevorrichtung kann besonders einfach ausgestaltet sein. Es können damit lediglich ein ordnungsgemäßer erster Druckzustand und ein nicht-ordnungsgemäßer zweiter Druckzustand anzeigbar sein. Zu diesem Zweck kann die Druckanzeigevorrichtung einen in Abhängigkeit eines in der zweiten Druckregelstufe herrschenden Drucks entgegen der Rückstellkraft eines zweiten Federelements verschiebbaren Zylinder aufweisen. Ferner kann die Druckanzeigevorrichtung ein den Zylinder umgebendes Gehäuse umfassen, welches zumindest abschnittsweise transparent ausgebildet ist, so dass die Stellung des Zylinders von außen her erkennbar ist. Beispielsweise kann der Zylinder farbig ausgestaltet sein. So kann dann von außen her besonders schnell und einfach erkannt werden, in welcher Stellung der Zylinder sich befindet. Beispielsweise kann das Gehäuse ein Sichtfenster aufweisen, durch welches der Zylinder sichtbar ist. Das Gehäuse ist zweckmäßigerweise zylindrisch ausgebildet und weist ein ringartiges Sichtfenster auf. In diesem Fall kann beispielsweise durch die Verschiebung eines rot eingefärbten Zylinders in den Bereich des Sichtfensters schnell und einfach erkannt werden, dass in der zweiten Druckregelstufe ein unzulässig hoher Druck herrscht. Wenn dagegen der Zylinder im Sichtfenster nicht erkennbar ist, zeigt das den ordnungsgemäßen Betriebszustand der zweiten Druckregelstufe an.

Zur weiteren sicherheitstechnischen Verbesserung kann an einem stromaufwärts der ersten Druckregelstufe sich vom Gehäuse erstreckenden Eingangsstutzen ein bei Überschreiten einer vorgegebenen Temperatur irreversibel schließendes Absperrventil vorgesehen sein. Das Absperrventil kann einen mit einem dritten Federelement belasteten weiteren Ventilkörper umfassen, welcher beispielsweise durch einen aus einem Lot gebildeten Ring in einer geöffneten Stellung gehalten wird. Sofern das Absperrventil auf eine Temperatur oberhalb der Schmelztemperatur des Lots aufgeheizt wird, schmilzt das Lot und der weitere Ventilkörper wird mittels des dritten Federelements in eine geschlossene Stellung gezwungen, so dass damit der Gasfluss irreversibel unterbrochen wird. Der vorgeschlagene Gasdruckregler sichert einen Gasvorrat, beispielsweise eine Flüssiggasflasche, gegen thermische Einflüsse, beispielsweise Feuer, ab.

Nach einer weiteren vorteilhaften Ausgestaltung weist die zweite Druckregeleinrichtung eine im Falle eines unzulässigen Abfalls das Ausgangsdrucks den Gasstrom absperrende Absperreinrichtung und eine von einer Gehäuseaußenseite her manuell bedienbare Stelleinrichtung zur Aufhebung eines durch die Absperreinrichtung bedingten Sperrzustands auf. Im Falle eines unzulässigen Abfalls des Ausgangsdrucks, welcher beispielsweise durch einen Bruch einer vom Sicherheitsventil wegführenden Gasversorgungsleitung bedingt sein kann, wird mittels der zweiten Druckregelstufe automatisch ein Gasfluss durch den Gasdruckregler unterbrochen. Mit der vorgeschlagenen Absperreinrichtung wird die zweite Druckregelstufe gleichzeitig in einen Sperrzustand versetzt, welcher erst durch Bedienung der manuell bedienbaren Stelleinrichtung wieder aufgehoben werden kann. Auch damit wird in sicherheitstechnisch vorteilhafter Weise ein unerwünschter Gasaustritt sicher und zuverlässig vermieden. Zur Wiederinbetriebnahme nach einem Störzustand ist es erforderlich, dass der Sperrzustand manuell wieder aufgehoben wird. Das ermöglicht eine vorherige Beseitigung des Störzustands, beispielsweise die Auswechslung einer gebrochenen Gasversorgungsleitung oder dgl..

Nach einer weiteren vorteilhaften Ausgestaltung umfasst ein Gehäuse ein Gehäusemittelteil, an dem in einstückiger Ausbildung der Eingangsstutzen, der Ausgangsstutzen, ein erster Anschlussstutzen zum Anschluss der Stelleinrichtung sowie eine Zwischenwand zum Trennen der ersten Druckregelstufe von der zweiten Druckregelstufe gebildet sind. Die vorgeschlagene Ausgestaltung des Gehäusemittelteils vereinfacht die Konstruktion des Gasdruckreglers. Der Gasdruckregler kann unter Verwendung weniger Teile hergestellt werden. Er ist damit einfach aufgebaut, robust und störunanfällig.

Am Gehäusemittelteil kann ferner in einstückiger Ausbildung ein zweiter Anschlussstutzen zum Anschluss der Druckanzeigevorrichtung vorgesehen sein. Der erste und der zweite Anschlussstutzen können einander gegenüberliegend am Gehäusemittelteil vorgesehen sein. In ähnlicher Weise können auch der Eingangs- und der Ausgangsstutzen gegenüberliegend am Gehäusemittelteil vorgesehen sein. Zweckmäßigerweise sind die Stutzen etwa in einem Winkel von 90° versetzt zueinander am Gehäusemittelteil vorgesehen. Das ermöglicht einen klaren und übersichtlichen Aufbau des Gasdruckreglers.

Nachfolgend wird ein Ausführungsbeispiel der Erfindung anhand der Zeichnungen näher erläutert. Es zeigen:
- Fig. 1: eine erste Schnittansicht durch einen Gasdruckregler,
- Fig. 2: eine Schnittansicht durch ein Anschlussstück,
- Fig. 3: eine zweite Schnittansicht durch den Gasdruckregler gemäß Fig. 1 gemäß der Schnittlinie A-A,
- Fig. 4: eine Detailansicht des Ausschnitts I in Fig. 3,
- Fig. 5: eine Schnittansicht gemäß Fig. 4 in einem zweiten Zustand,
- Fig. 6: die Schnittansicht gemäß Fig. 3 in einem zweiten Zustand,
- Fig. 7: eine Detailansicht des Details II in Fig. 6,
- Fig. 8: eine Schnittansicht des Sicherheitsventils gemäß Fig. 1,
- Fig. 9: eine Detailansicht gemäß III, welche den Schließzustand zeigt,
- Fig. 10: eine weitere Detailansicht gemäß Fig. 9, welche den Öffnungszustand zeigt und
- Fig. 11: eine schematische Übersichtsansicht einer Anordnung unter Verwendung des Gasdruckreglers.

In den Figuren weist ein allgemein mit dem Bezugszeichen G bezeichneter Gasdruckregler ein Gehäuse 1 auf, in dem eine erste Druckregelstufe D1 sowie stromabwärts folgend eine zweite Druckregelstufe D2 vorgesehen sind. Die erste Druckregelstufe D1 weist in herkömmlicher Weise eine erste Stellmembran 2 auf, mit welcher ein erster Ventilhebel 3 zum Öffnen und Schließen einer ersten Düse 4 bewegbar ist. Eine erste Feder 5 zwingt die erste Stellmembran 2 in Richtung einer Zwischenwand 6, welche Bestandteil eines Gehäusemittelteils 7 ist.

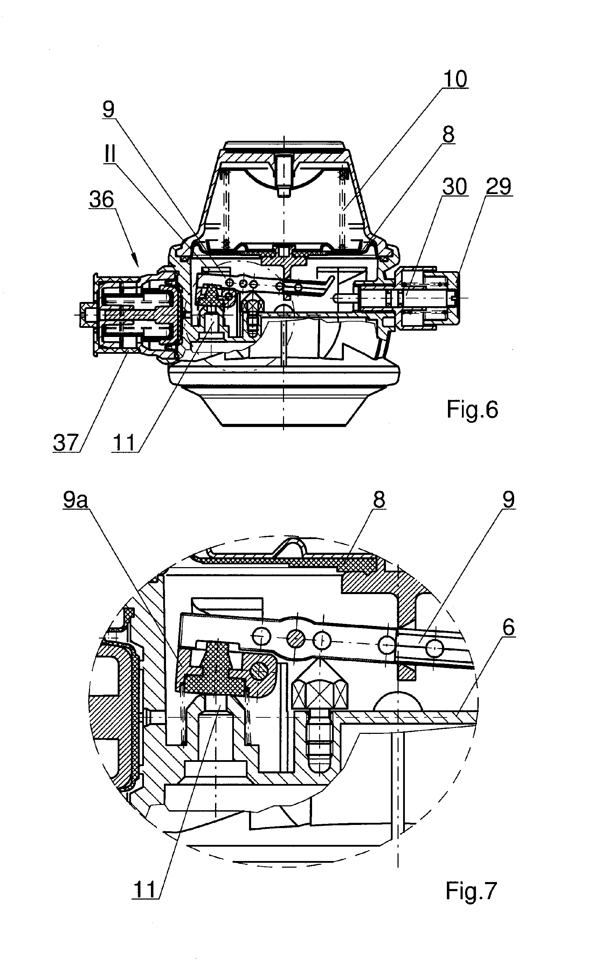

Die zweite Druckregelstufe D2 umfasst eine zweite Stellmembran 8, mit welcher ein zweiter Ventilhebel 9 verstellbar ist. Eine zweite Feder 10 zwingt die zweite Stellmembran 8 ebenfalls in Richtung der Zwischenwand 6. Mit dem Bezugszeichen 11 ist eine zweite Düse bezeichnet, welche mittels eines am zweiten Ventilhebel 9 schwenkbar angebrachten Schließkörpers 9a verschließbar ist. Der Schließkörper 9a bildet mit dem zweiten Ventilhebel 9 eine an sich bekannte "Knickhebelanordnung" (siehe Fig. 7).

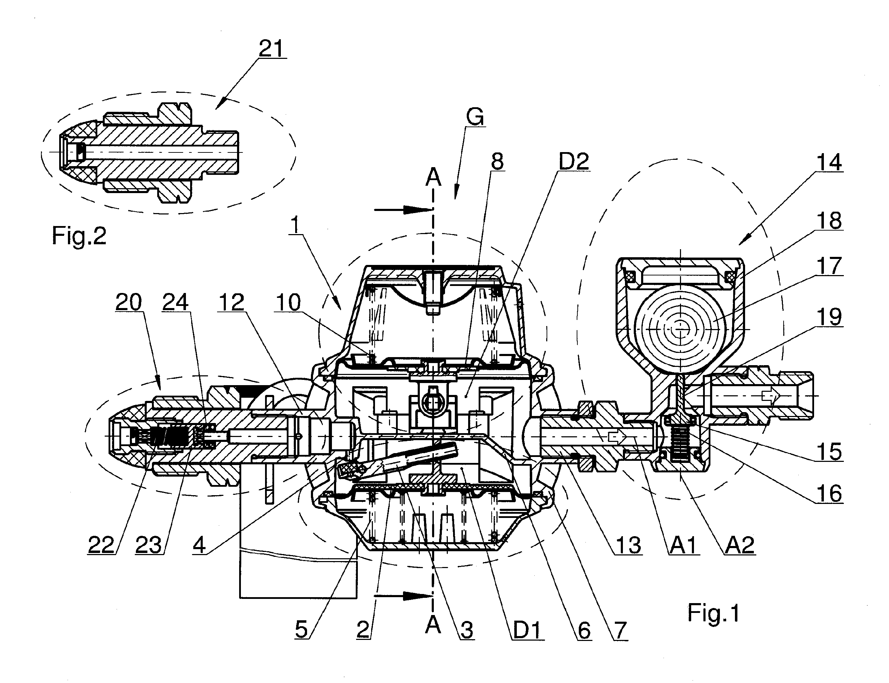

Vom Gehäusemittelteil 7 erstreckt sich ein Eingangsstutzen 12 sowie ein Ausgangsstutzen 13. Am Ausgangsstutzen 13 ist ein allgemein mit dem Bezugszeichen 14 bezeichnetes Sicherheitsventil befestigt. Das Sicherheitsventil 14 weist einen ersten Ventilkörper 15 auf, welcher mittels einer dritten Feder 16 in eine geschlossene Stellung gezwungen wird. Eine erste Achse A1 des Ausgangsstutzens 13 verläuft etwa senkrecht zu einer zweiten Achse A2 des ersten Ventilkörpers 15. Mit dem Bezugszeichen 17 ist eine Kugel bezeichnet, welche in einem gasdicht verschlossenen Sicherheitsventilgehäuse 18 bewegbar ist. Vom ersten Ventilkörper 15 erstreckt sich eine Ventilstange 19 in das Sicherheitsventilgehäuse 18. Bei der in Fig. 1 gezeigten "Normalposition" befindet sich die Kugel 17 an einer Position, in welcher der erste Ventilkörper 15 mittels der Ventilstange 19 in einer offenen Stellung gehalten wird.

Am Eingangsstutzen 12 kann ein thermisch auslösbares Absperrventil 20 oder alternativ das in Fig. 2 gezeigte herkömmliche Anschlussstück 21 angebracht sein. Das Absperrventil 20 weist einen mit einer vierten Feder 22 belasteten zweiten Ventilkörper 23 auf, welcher mittels eines aus einem Lot hergestellten Rings 24 in einer geöffneten Stellung gehalten wird.

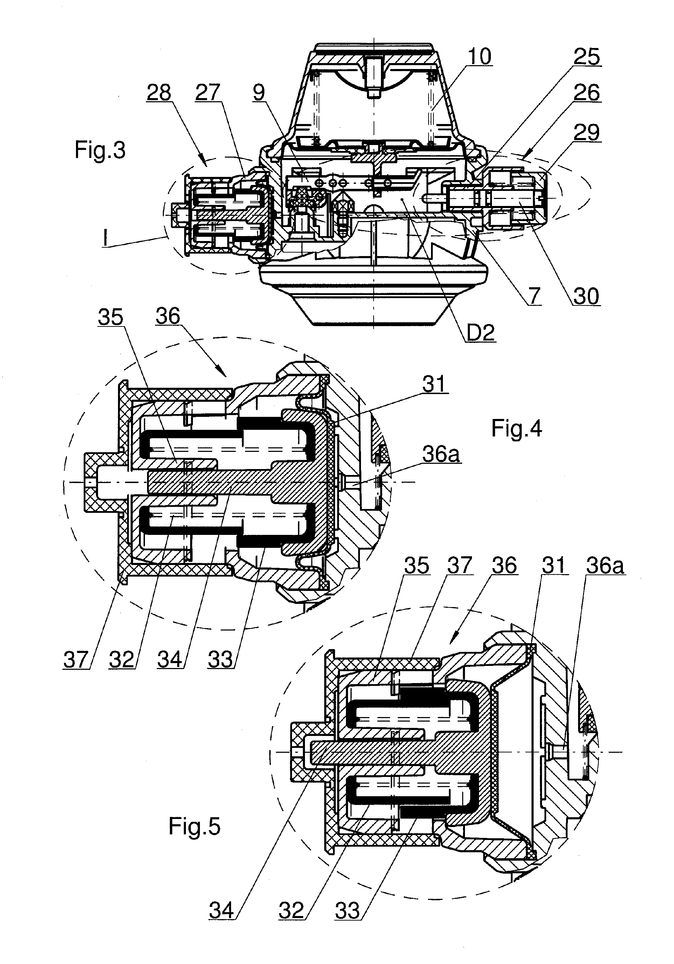

Wie insbesondere aus Fig. 3 ersichtlich ist, kann das Gehäusemittelteil 7 einen ersten Anschlussstutzen 25 zum Anschluss einer Stelleinrichtung 26 sowie einen zweiten Anschlussstutzen 27 zum Anschluss einer Druckanzeigevorrichtung 28 aufweisen.

Die Stelleinrichtung 26 weist einen Druckknopf 29 auf, mit dem entgegen der Wirkung einer (hier nicht näher gezeigten) Feder ein Stellbolzen 30 in den Bereich des zweiten Ventilhebels 9 (siehe Fig. 6) gedrückt werden kann.

Die Druckanzeigevorrichtung 28 ist insbesondere in den Fig. 4 und 5 gezeigt. Sie weist eine dritte Stellmembran 31 auf, an der entgegen der Kraft einer fünften Feder 32 ein Zylinder 33 befestigt ist, welcher mittels eines davon sich erstreckenden Führungsbolzens 34 in einer Führung 35 geführt ist, welche an einer Innenseite eines den Zylinder 33 umgebenden Druckanzeigegehäuses 36 vorgesehen ist. Das Druckanzeigegehäuse 36 umfasst eine transparente Kappe 37, durch welche eine Position des Zylinders 33 von außen her erkennbar ist.

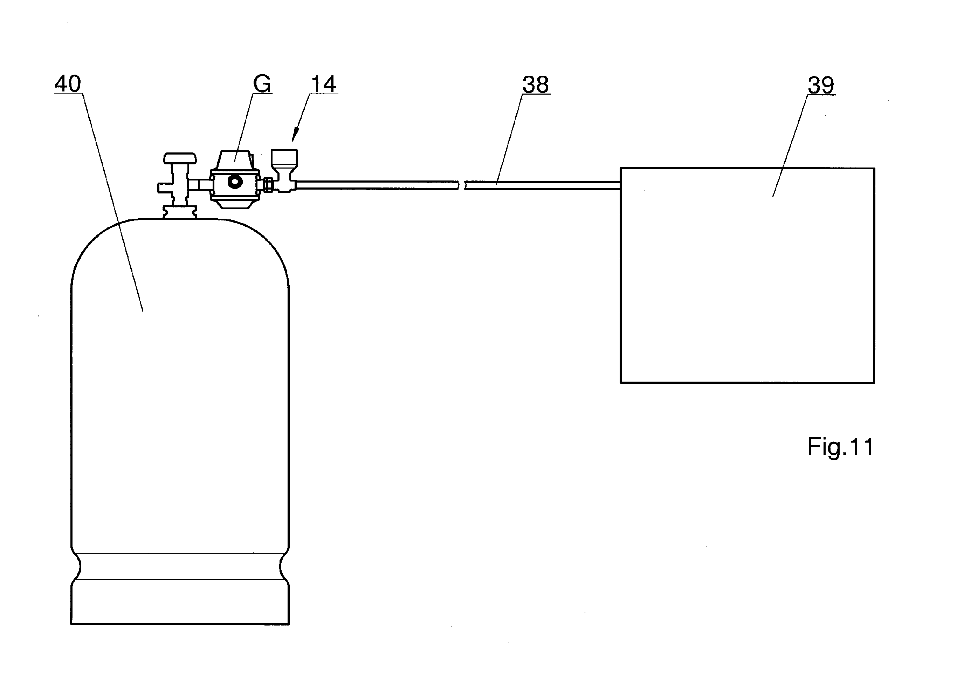

Fig. 11 zeigt schematisch eine Anordnung unter Verwendung des Gasdruckreglers G in Verbindung mit einem Gasgerät 39. Dabei ist der Gasdruckregler G fest am Ausgangsstutzen 13 einer Gasflasche 40 angeschlossen. Am Sicherheitsventil 14 ist eine Gasversorgungsleitung 38 angebracht, welche eine Verbindung mit dem Gasgerät 39 herstellt.

Die Funktion des Gasdruckreglers G wird nunmehr insbesondere in Zusammensicht mit den Fig. 4 bis 11 näher erläutert.

Gas strömt durch das Absperrventil 20 über den Eingangsstutzen 12 durch die erste Düse 4 in die erste Druckregelstufe D1. Sofern das Absperrventil 20 auf eine Temperatur oberhalb einer Schmelztemperatur des Rings 24 erhitzt wird, schmilzt der Ring 24 und der zweite Ventilkörper 23 wird in die geschlossene Stellung gezwungen. Im Falle einer unzulässigen Temperaturerhöhung ist damit ein unerwünschter Gasaustritt in Richtung der ersten Druckregelstufe D1 nicht mehr möglich.

In der ersten Druckregelstufe D1 wird ein anstehender Gasdruck in herkömmlicher Weise auf einen Zwischendruck im Bereich von 110 bis 150 mbar geregelt. In der stromabwärts nachgeschalteten zweiten Druckregelstufe D2 wird der Zwischendruck auf einen Ausgangsdruck im Bereich von 30 bis 55 mbar reduziert.

Im Falle eines Bruchs einer dem Sicherheitsventil 14 nachgeschalteten Gasversorgungsleitung 38 fällt der Druck in der zweiten Druckregelstufe D2 ab. Infolgedessen wird der zweite Ventilhebel 9 mittels der durch die zweite Feder 10 belasteten zweiten Stellmembran 8 in Richtung der Zwischenwand 6 gedrückt. Der Schließkörper 9a wird wegen der Knickhebelanordnung in einer geschlossenen Stellung arretiert, so dass die zweite Düse 11 fest verschlossen ist. Die Arretierung kann nur mehr manuell wieder aufgehoben werden, indem der Stellbolzen 30 mittels des Druckknopfs 29 gegen das dem Schließkörper 9a gegenüberliegende Ende des zweiten Ventilhebels 9 gedrückt und damit der zweite Ventilhebel 9 in Richtung der zweiten Stellmembran 8 zurückgeschwenkt wird.

Mittels der Druckanzeigevorrichtung 28 kann schnell und einfach erkannt werden, ob in der zweiten Druckregelstufe D2 ein unzulässig hoher Druck ansteht. Zu diesem Zweck ist das Druckanzeigegehäuse 36 über eine Bohrung mit der zweiten Druckregelstufe D2 verbunden. Der in der zweiten Druckregelstufe D2 herrschende Druck wird über die dritte Stellmembran 31 auf den Zylinder 33 übertragen. Der Zylinder 33 bewegt sich entgegen der von der fünften Feder 32 ausgeübten Kraft in axialer Richtung, wenn der in der zweiten Druckregelstufe D2 herrschende Druck größer als ein vorgegebener Normaldruck ist. Eine Wand des Zylinders 33 kann beispielsweise farbig ausgestaltet sein, so dass schnell und einfach durch die transparente Kappe 37 des Druckanzeigegehäuses 36 erkennbar ist, ob der Zylinder 33 sich in einer einen Überdruck anzeigenden Position befindet oder nicht. Fig. 5 zeigt die Situation, in welcher der Zylinder 33 so verschoben ist, dass er durch die transparente Kappe 37 des Druckanzeigegehäuses 36 erkennbar ist. Fig. 4 zeigt dagegen den Normalzustand, in dem der Zylinder 33 nicht durch die transparente Kappe 37 des Druckanzeigegehäuses 36 erkennbar ist.

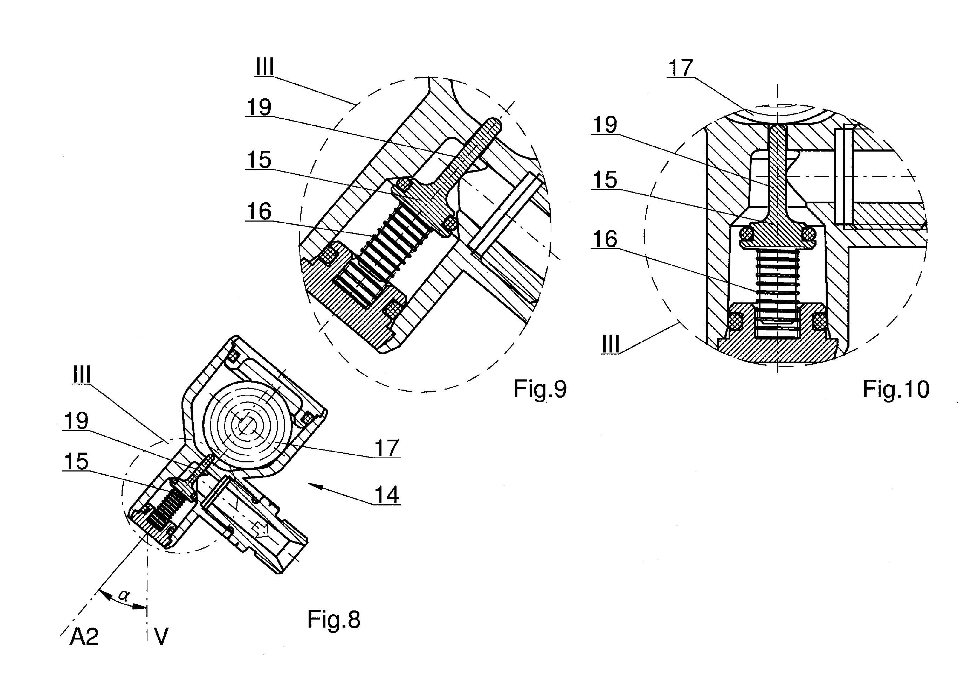

Die Fig. 8 bis 10 zeigen die Funktion des Sicherheitsventils 14. Die Fig. 8 und 9 zeigen das Sicherheitsventil 14 in einer verkippten Sicherheitsposition. Dabei ist die Kugel 17 so ausgelenkt, dass damit die Ventilstange 19 nicht mehr berührt und somit der erste Ventilkörper 15 nicht mehr in die geöffnete Stellung gezwungen werden kann. Fig. 10 zeigt das Sicherheitsventil 14 in der Normalposition. Dabei drückt die Kugel 17 die Ventilstange 19 derart, dass der erste Ventilkörper 15 sich in der geöffneten Stellung befindet.

In Fig. 8 entspricht eine durch das Sicherheitsventil 14 verlaufende Achse der zweiten Achse A2. Die zweite Achse A2 fällt in der "Normalposition" mit der Vertikalen V zusammen. In der in den Fig. 8 und 9 gezeigten Sicherheitsposition ist das Sicherheitsventil 14 gegenüber der Vertikalen V um den Kippwinkel α verkippt. Das Sicherheitsventil 14 ist so ausgestaltet, dass die Kugel 17 ab einem Kippwinkel α von 35°, vorzugsweise 40°, ihre Lage derart verändert, dass damit der erste Ventilkörper 15 nicht länger in der geöffneten Stellung gehalten wird.

Falls die Gasflasche 40 verkippt wird, verkippt gleichzeitig der Gasdruckregler G mit dem damit fest verbundenen Sicherheitsventil 14. Durch das Sicherheitsventil 14 wird der Gasfluss zur Gasversorgungsleitung 38 gesperrt (siehe Fig. 11).

### Bezugszeichenliste

- 1: Gehäuse
- 2: erste Stellmembran
- 3: erster Ventilhebel
- 4: erste Düse
- 5: erste Feder
- 6: Zwischenwand
- 7: Gehäusemittelteil
- 8: zweite Stellmembran
- 9: zweiter Ventilhebel
- 9a: Schließkörper
- 10: zweite Feder
- 11: zweite Düse
- 12: Eingangsstutzen
- 13: Ausgangsstutzen
- 14: Sicherheitsventil
- 15: erster Ventilkörper
- 16: dritte Feder
- 17: Kugel
- 18: Sicherheitsventilgehäuse
- 19: Ventilstange
- 20: Absperrventil
- 21: Anschlussstück
- 22: vierte Feder
- 23: zweiter Ventilkörper
- 24: Ring
- 25: erster Anschlussstutzen
- 26: Stelleinrichtung
- 27: zweiter Anschlussstutzen
- 28: Druckanzeigevorrichtung
- 29: Druckknopf
- 30: Stellbolzen
- 31: dritte Stellmembran
- 32: fünfte Feder
- 33: Zylinder
- 34: Führungsbolzen
- 35: Führung
- 36: Druckanzeigegehäuses
- 37: transparente Kappe
- 38: Gasversorgungsleitung
- 39: Gasgerät
- 40: Gasflasche

- A1: erste Achse
- A2: zweite Achse
- D1: erste Druckregelstufe
- D2: zweite Druckregelstufe
- G: Gasdruckregler
- V: Vertikale
- α: Kippwinkel

## Patentansprüche

1. Gasdruckregler (G), bei dem in einem Gehäuse (1) eine erste Druckregelstufe (D1) zum Regeln eines Eingangsdrucks auf einen Zwischendruck im Bereich von 110 bis 150 mbar und eine der ersten Druckregelstufe (D1) stromabwärts nachgeschalteten zweiten Druckregelstufe (D2) zum Regeln des Zwischendrucks auf einen Ausgangsdruck im Bereich von 30 bis 55 mbar vorgesehen sind,
**dadurch gekennzeichnet, dass**
an einem stromabwärts der zweiten Druckregelstufe (D2) vom Gehäuse (1) sich erstreckenden Ausgangsstutzen (13) ein Sicherheitsventil (14) befestigt ist, welches in einer ordnungsgemäßen Normalposition einen Gasdurchfluss ermöglicht und bei einer gegenüber der Normalposition um einen Kippwinkel (α) von mehr als 35° verkippten Sicherheitsposition den Gasdurchfluss selbsttätig unterbricht.

2. Gasdruckregler (G) nach Anspruch 1, wobei das Sicherheitsventil (14) selbststätig wieder öffnet, wenn der Kippwinkel (α) unterschritten wird.

3. Gasdruckregler (G) nach einem der vorhergehenden Ansprüche, wobei das Sicherheitsventil (14) einen Ventilkörper (15) und einen durch eine Kippbewegung in seiner Lage veränderbaren Stellkörper, vorzugsweise eine Kugel (17), umfasst, welcher in der Normalposition den Ventilkörper (15) entgegen der Kraft eines den Ventilkörper (15) in eine geschlossene Stellung zwingenden ersten Federelements (16) in einer geöffneten Stellung hält und welcher in der Sicherheitsposition eine Lage einnimmt, in welcher der Ventilkörper (15) durch die Kraft des ersten Federelements (16) in die geschlossene Stellung gezwungen wird.

4. Gasdruckregler (G) nach einem der vorhergehenden Ansprüche, wobei das Sicherheitsventil (14) so ausgestaltet ist, dass im am Ausgangsstutzen (13) befestigten Zustand eine Bewegungsrichtung des Ventilkörpers (15) etwa senkrecht zu einer Achse (A1) des Ausgangsstutzens (13) verläuft.

5. Gasdruckregler (G) nach einem der vorhergehenden Ansprüche, wobei die zweite Druckregelstufe (D2) mit einer Druckanzeigevorrichtung (28) versehen ist.

6. Gasdruckregler (G) nach einem der vorhergehenden Ansprüche, wobei mit der Druckanzeigevorrichtung (28) lediglich ein ordnungsgemäßer erster Druckzustand und ein nicht-ordnungsgemäßer zweiter Druckzustand anzeigbar sind.

7. Gasdruckregler (G) nach einem der vorhergehenden Ansprüche, wobei die Druckanzeigevorrichtung (28) einen in Abhängigkeit des in der zweiten Druckregelstufe (D2) herrschenden Drucks entgegen der Rückstellkraft eines zweiten Federelements (32) verschiebbaren Zylinder (33) aufweist.

8. Gasdruckregler (G) nach einem der vorhergehenden Ansprüche, wobei die Druckanzeigevorrichtung (28) ein den Zylinder (33) umgebendes Gehäuse (36) umfasst, welches zumindest abschnittsweise transparent ausgebildet ist, so dass die Stellung des Zylinders (33) von außen her erkennbar ist.

9. Gasdruckregler (G) nach einem der vorhergehenden Ansprüche, wobei an einem stromaufwärts der ersten Druckregelstufe (D1) sich vom Gehäuse (1) erstreckenden Eingangsstutzens (12) ein bei Überschreiten ein vorgegebenen Temperatur irreversibel schließendes Absperrventil (20) vorgesehen ist.

10. Gasdruckregler (G) nach einem der vorhergehenden Ansprüche, wobei die zweite Druckregelstufe (D2) eine im Falle eines unzulässigen Abfalls des Ausgangsdrucks den Gasstrom absperrende Absperreinrichtung (9, 38) und eine von einer Gehäuseaußenseite her manuell bedienbare Stelleinrichtung (26) zur Aufhebung eines durch die Absperreinrichtung (9, 38) bedingten Sperrzustands aufweist.

11. Gasdruckregler (G) nach einem der vorhergehenden Ansprüche, umfassend ein Gehäuse (1) mit einem Gehäusemittelteil (7), an dem in einstückiger Ausbildung der Eingangsstutzen (12), der Ausgangsstutzen (13), ein erster Anschlussstutzen (25) zum Anschluss der Stelleinrichtung (26) sowie eine Zwischenwand (6) zum Trennen der erste Druckregelstufe (D1) von der zweiten Druckregelstufe (D2) gebildet sind.

12. Gasdruckregler (G) nach einem der vorhergehenden Ansprüche, wobei am Gehäusemittelteil (7) in einstückiger Ausbildung ferner ein zweiter Anschlussstutzen (27) zum Anschluss der Druckanzeigevorrichtung (28) vorgesehen ist.
